# EUROPEAN PATENT APPLICATION

(11) **EP 4 831 793 A1**
(43) Date of publication of application: **28.10.2026**
(21) Application number: 25171955.5
(22) Date of filing: 23.04.2025
(51) Int. Cl.: G06F 8/35, G06F 9/445, G06F 8/71

(54) **METHOD AND SYSTEM FOR MERGING CHANGES IN A MODEL-BASED SYSTEMS ENGINEERING (MBSE) ECOSYSTEM**

(71) Applicant: Siemens Industry Software NV, 3001 Leuven (BE)
(72) Inventor: Ramanath, Vinay, 560070 Bengaluru, Karnataka (IN); ., Akshobhya, 560085 Bengaluru, Karnataka (IN); Ajayan, Aswin, 670673 Kannur, Kerala (IN); B V, Krishna Prasad, 560050 Bangalore (IN); Jordan, Lars, 85586 Poing (DE)
(74) Representative: Isarpatent

(57) **Abstract**

A computer-implemented method for merging changes in a model-based systems engineering (MBSE) ecosystem is disclosed. The method involves receiving a baseline model (210) represented in a structured data format, consisting of multiple elements and associated properties, as well as two or more modified versions (212, 214) of the baseline model incorporating changes to its elements and/or properties. The method identifies changes by detecting property modifications through altered key-value pairs and detecting structural element changes such as additions, deletions, or modifications to nodes. Predefined merge rules are applied to the detected changes, classifying them into auto-mergeable changes, which are merged automatically without user intervention, and conflicting changes, flagged for resolution. This facilitates efficient and collaborative model management by enabling the seamless integration of multiple users' contributions while ensuring consistency in the MBSE ecosystem.

## Description

The present disclosure relates to model-based systems engineering, and more particularly relates to a method and system for merging changes in a model-based systems engineering (MBSE) ecosystem.

Model-Based Systems Engineering (MBSE) is a formalized approach to applying modeling techniques to support various systems engineering activities, including system requirements, design, analysis, verification, and validation. MBSE spans the entire system development lifecycle, beginning in the conceptual design phase and continuing through later lifecycle stages. By enabling continuous verification of product requirements and managing processes in a unified digital environment, MBSE promotes seamless integration and traceability from concept to end-of-life.

MBSE ensures collaboration across all domains involved in a project, such as electrical, mechanical, software, and electronic systems. MBSE models must also accommodate multiple user perspectives, such as those of system architects who design models based on overarching requirements and simulation engineers who modify the models according to specific needs. This multi-perspective approach, while essential, introduces challenges in managing and merging changes made by multiple users to the same model.

The problem of merging model changes is inherently dependent on how the model is represented. Models can be stored using various languages, such as Unified Modeling Language (UML), Eclipse Management Framework (EMF), or Systems Modeling Language (SysML), each with its own structure and purpose. While merging techniques for UML- and EMF-based models have been explored with mixed results, the specific merging challenges for models represented in SysML projects remain largely unresolved.

Traditional text-based merging approaches, such as substring detection, are unsuitable for SysML models. While these methods can identify changes in textual files (e.g., source code or configuration files), they fail to provide contextual information about the modifications, which is crucial for system models. Instead, intermediate representations, such as JSON, may serve as a basis for developing merging algorithms that better align with SysML's structural requirements. However, existing JSON-based merging algorithms are still in their infancy and do not yet address the unique challenges of system model merging.

One proven merging approach in software engineering is the three-way merge algorithm, which relies on a diffing algorithm to identify changes and resolve conflicts. However, adapting this method for SysML models requires careful evaluation of how differences are calculated and reconciled. This highlights the need for a robust, context-aware merging solution specifically tailored to SysML representations, as current methods are either inadequate or impractical for use in systems engineering.

The lack of a reliable merging algorithm for SysML models creates a critical gap in MBSE practices, limiting the ability to efficiently manage model modifications while preserving model integrity and consistency across domains.

Thus, there exists a need for a system and method that automatically merges changes in a model-based systems engineering (MBSE) ecosystem.

The term "Model-Based Systems Engineering (MBSE)" refers to a formalized methodology that uses digital models as the primary means for defining, analyzing, validating, and managing system requirements and designs throughout a system's lifecycle. MBSE centralizes system information in a unified digital environment, enhancing consistency, traceability, and collaboration across multidisciplinary teams. For example, in the development of an autonomous vehicle, MBSE allows engineers to create a digital model integrating subsystems like sensors, control algorithms, and powertrain components. This model can then be used by simulation engineers to test real-world scenarios, such as emergency braking, ensuring that requirements are met before physical prototyping. Commonly implemented using tools like SysML (Systems Modeling Language), MBSE supports iterative development by allowing stakeholders to modify and simulate designs dynamically.

The term "baseline model" refers to a formally established and agreed-upon version of a system model that serves as a reference point for further development, analysis, and validation. The baseline model captures a specific state of the system at a defined stage in its lifecycle, encompassing requirements, design elements, behaviors, and interactions among system components. It acts as the foundation against which subsequent changes, enhancements, or iterations are compared and evaluated. By freezing a particular version of the model, the baseline ensures traceability, consistency, and alignment across multidisciplinary teams working on the project.

The term "elements" refer to the fundamental building blocks or components within a system model that collectively define the structure, behavior, and relationships of the system. Elements can represent various aspects of the system, such as physical components, functional entities, requirements, constraints, interfaces, or behaviors. For example, in a SysML (Systems Modeling Language) model of an autonomous vehicle, elements may include physical components like sensors, actuators, and the control unit, as well as functional elements like obstacle detection algorithms or braking logic. These elements are organized hierarchically and interconnected to represent the system's architecture and behavior holistically.

The term "property" of an element refers to an attribute, characteristic, or parameter that defines specific aspects of that element and contributes to its role or behavior within the overall system model. Properties provide quantitative or qualitative descriptions that help define the functionality, performance, or constraints of an element. For example, in a model of an autonomous vehicle, a sensor element may have properties such as "range" (e.g., 200 meters), "resolution" (e.g., 0.1 meters), and "power consumption" (e.g., 5 watts).

The term "key-value pairs" refers to a data representation mechanism used to define and store properties or attributes of elements within a system model. A key-value pair consists of two components: the "key," which identifies the property or attribute, and the "value," which specifies its corresponding data or parameter. For example, in the modeling of an autonomous vehicle, a sensor element could include key-value pairs such as "Range: 200 meters," "Resolution: 0.1 meters," and "Power Consumption: 5 watts," where the keys ("Range," "Resolution," "Power Consumption") identify specific properties and the values ("200 meters," "0.1 meters," "5 watts") provide their respective details.

It is an object of the present invention to provide a method for automatically merging changes in a model-based systems engineering (MBSE) ecosystem.

The method comprises receiving a baseline model represented in a structured data format, where the model consists of multiple elements and their associated properties.

The processing unit also receives two or more modified versions of the baseline model, each containing changes to one or more elements or properties. These models serve as inputs to identify and analyze differences between the baseline model and its modified versions.

The method comprises identifying changes between the baseline model and the modified versions by detecting property changes through modifications to key-value pairs and element changes through additions, deletions, or modifications of nodes in the structured data format.

The method comprises determining merge outcomes for the identified changes by applying predefined merge rules.

In an embodiment, changes are classified as auto-mergeable changes, which are merged automatically without user intervention, or conflicting changes, which are flagged for user resolution.

The method comprises generating a merge result that includes a representation of the merged model incorporating auto-mergeable changes and a list of conflicting changes requiring user intervention.

The method comprises providing the merge result via an application programming interface (API) for integration with MBSE tools. The API enables downstream tools to display merge outcomes and facilitate conflict resolution, ensuring interoperability across tools in the MBSE ecosystem.

In an embodiment, property changes are flagged as a conflict if the same key is impacted in the modified versions of the model, unless the changes to the property values are identical, in which case the conflict is resolved automatically.

In an embodiment, new key additions at different hierarchical levels in the structured data format are classified as auto-mergeable changes.

In an embodiment, new key additions at the same hierarchical level in the structured data format are classified as conflicting changes and flagged for user intervention.

In an embodiment, deletions of elements at different hierarchical levels in the structured data format are classified as auto-mergeable changes.

In an embodiment, deletions of a parent element in one modified version of the model combined with additions or modifications of a child element in another modified version of the model are classified as conflicting changes and flagged for user intervention.

In an embodiment, property changes are resolved through value comparison of key-value pairs of the modified versions against the baseline model.

In an embodiment, the predefined merge rules used to determine merge outcomes are model-agnostic and applicable across different structured data formats representing the models.

In an embodiment, the method comprises implementing an optimization technique to automatically merge identical changes to property values without requiring user intervention.

In an embodiment, conflicts related to the ordering of elements, such as Left-Right or Right-Left precedence, are flagged for user intervention.

In an embodiment, the types of changes made to the baseline model are categorized and presented to the user as either a property change or an element change.

In an embodiment, the specific merge rule that determined the conflicting changes or auto-mergeable changes is indicated against the change.

It is an object of the present invention to provide a data processing device for merging changes in a model-based systems engineering (MBSE) ecosystem. The data processing device comprises one or more processing units, and a memory communicatively coupled to the one or more processing units. The memory comprises a module stored in the form of machine-readable instructions executable by the one or more processing units, wherein the module is configured to perform the method steps as stated above.

It is an object of the present invention to provide a system for merging changes in a model-based systems engineering (MBSE) ecosystem, wherein the system comprises a plurality of user devices configured to execute modifications on a baseline model. The system includes a first application executed on one of the user devices, where a first user modifies the baseline model within the first application to create a first modified version of the model. Similarly, a second application is executed on another user device, where a second user modifies the baseline model within the second application to create a second modified version of the model. The system also includes a data processing device communicatively connected to the user devices via a communication network. The data processing device is configured to automatically merge the changes from the modified versions, ensuring an efficient and consistent merging process within the MBSE ecosystem.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:
- FIG 1: illustrates a system 100 for merging changes in a model-based systems engineering (MBSE) ecosystem, in accordance with an embodiment of the present invention;
- FIG 2: illustrates operation of a system 200 for merging changes in a model-based systems engineering (MBSE) ecosystem, in accordance with an embodiment of the present invention;
- FIG 3: illustrates an architecture of a data processing device 108, in accordance with an embodiment of the present invention;
- FIG 4: is a flowchart 400 of a method of automatically merging changes in a model-based systems engineering (MBSE) ecosystem, in accordance with an embodiment of the present invention;
- FIG 5: illustrates a modification scenario 500 in accordance with a first rule of the predefined merge rules of the present invention;
- FIG 6: illustrates a modification scenario 600 in accordance with a second rule of the predefined merge rules of the present invention;
- FIG 7: illustrates a modification scenario 700 in accordance with a third rule of the predefined merge rules of the present invention;
- FIG 8: illustrates a modification scenario 800 in accordance with a fourth rule of the predefined merge rules of the present invention;
- FIG 9: illustrates a modification scenario 900 in accordance with a fifth rule of the predefined merge rules of the present invention;
- FIG 10: illustrates a modification scenario 1000 in accordance with a sixth rule of the predefined merge rules of the present invention; and
- FIG 11: illustrates a modification scenario 1100 in accordance with a seventh rule of the predefined merge rules of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

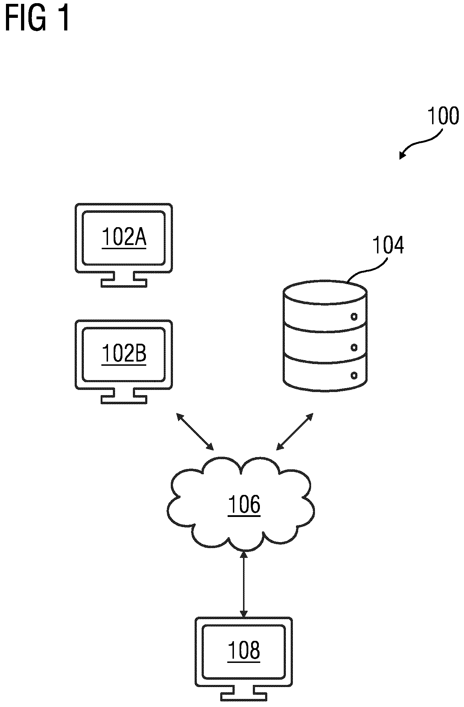

FIG. 1 illustrates a system 100 for merging changes in a model-based systems engineering (MBSE) ecosystem, in accordance with an embodiment of the present invention. The system 100 comprises at least one user device, a remote server 104, a data processing device 108, and a communication network 106. The user devices (102a, 102b) may include a first user device 102a, and a second user device 102b, wherein the user devices (102a, 102b) are configured to execute an application for making changes to a baseline model 210. The baseline model 210 may be model depicting a physical system and acts as a reference point for further development, analysis, and validation.

The remote server 104 may store the baseline model 210 and may share the baseline model 210 with one or more user devices (102a, 102b) for making changes to the baseline model 210. The communication network 106 communicatively connects the user devices (102a, 102b), remote server 104 and the data processing device 108 with each other to enable bi-directional communication.

The communication network 106 may include, but are not limited to, any one or more different types of networks such as, for example, cable networks, public networks (e.g., the Internet), private networks (e.g., frame-relay networks), wireless networks, cellular networks, telephone networks (e.g., a public switched telephone network), cloud based networks, or any other suitable private or public packet switched or circuit switched networks. Such network(s) may have any suitable communication range associated therewith and may include, for example, global networks (e.g., the Internet), metropolitan area networks (MANs), wide area networks (WANs), local area networks (LANs), or personal area networks (PANs).

The data processing device 108 may receive the modified versions (212, 214) from the user devices (102a, 102b), and the baseline model 210 from the remote server 104. Further, the data processing device 108 may identify the changes made in the modified versions (212, 214) of the model and merge changes to provide a final version of the model. The data processing device 108 may further flag the conflicting changes made to the modified versions (212, 214) for user intervention.

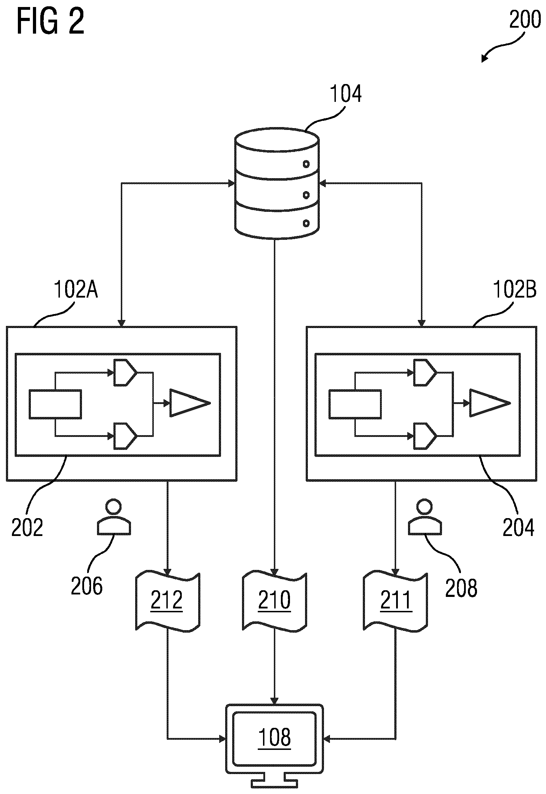

FIG. 2 illustrates operation of a system for merging changes in a model-based systems engineering (MBSE) ecosystem, in accordance with an embodiment of the present invention. The first user device 102a and the second user device 102b receive the baseline model 210 from the remote server 104. Further, the first user 206 and the second user 208 make changes to the baseline model 210 using a first application 202 and a second application 204 executed on the first user device 102a and the second user device 102b respectively.

In an embodiment, the first application 202 and the second application 204 may be a same application. In another embodiment, the first application 202 and the second application 204 may be different applications.

The baseline model 210 and the modified versions (212, 214) of the baseline model 210 may be represented in a structured data format. One such example of structured data format may be JSON file. The baseline model 210 and the modified versions (212, 214) are represented using JSON files.

The data processing device 108 may receive the JSON files of the baseline model 210, the first modified version 212, and the second modified version 214. The data processing device 108 may process the received files to identify the changes made to the baseline model 210 and further auto-merge the changes or flag conflicting changes.

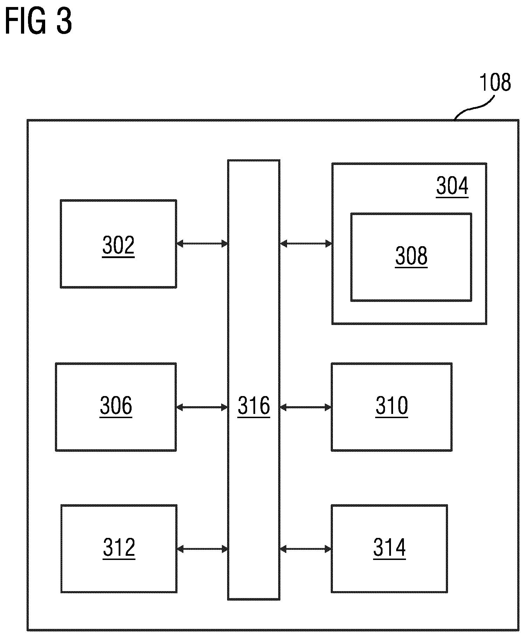

FIG. 3 illustrates an architecture of a data processing device 108, in accordance with an embodiment of the present invention. The data processing device 108 comprises a processing unit 302, a memory 304, a database 306, a network interface 310, an input unit 312, an output unit 314, and a bus 316.

The memory 304 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (LI, L2, etc.).

The memory 304 may include a module 308 stored in the form of machine-readable instructions executable by the one or more processing unit 302. The memory 304 may include multiple modules, wherein the modules, when executed, may identify the changes made in the modified versions (212, 214) of the model and identify auto mergeable and conflicting changes. Further, the module 308 may automatically merge the changes made to the baseline model 210.

The database may include removable storage and/or non-removable storage including, but not limited to, magnetic storage, optical disk storage, and/or tape storage. The database may provide non-volatile storage of computer-executable instructions and other data.

The database 306 may store computer-executable code, instructions, or the like that may be loadable into the memory and executable by the processing unit 302 to cause the processing unit 302 to perform or initiate various operations such as the merging the changes made to the baseline model 210. The database may store relevant data that may be copied to memory for use by the processing unit 302 during the execution of the computer-executable instructions. Moreover, output data generated as a result of execution of the computer-executable instructions by the processing unit 302 may be stored initially in memory and may ultimately be copied to the database for non-volatile storage.

More specifically, the database 306 is configured to access the memory; and one or more program module, applications, engines, managers, computer-executable code, scripts, or the like such as, for example, the various modules of the memory. Any of the components depicted as being stored in the database may include any combination of software, firmware, and/or hardware. The software and/or firmware may include computer-executable instructions (e.g., computer-executable program code) that may be loaded into the memory for execution by one or more of the processing unit 302 to perform any of the corresponding operations described earlier.

The processing unit 302 may be configured to access the memory and execute computer-executable instructions loaded therein. For example, the processing unit 302 may be configured to execute computer-executable instructions of the various program module, applications, engines, managers, or the like to cause or facilitate various operations to be performed in accordance with one or more embodiments of the disclosure. The processing unit 302 may include any suitable processing unit 302 capable of accepting data as input, processing the input data in accordance with stored computer-executable instructions, and generating output data. The processing unit 302 may include any type of suitable processing unit 302 including, but not limited to, a central processing unit 302, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processing unit 302 may have any suitable microarchitecture design that includes any number of constituent components such as, for example, registers, multiplexers, arithmetic logic units, cache controllers for controlling read/write operations to cache memory, branch predictors, or the like. The microarchitecture design of the processing unit 302 may be capable of supporting any of a variety of instruction sets.

The processing unit 302 is configured to receive the JSON files or any other suitable structured data format files corresponding to the baseline model 210, the first modified version 212, and the second modified version 214. The processing unit 302 may further identify the changes made in the first modified version 212 and the second modified version 214. The changes may correspond to one or more elements and/or properties of the baseline model 210.

The processing unit 302 may identify the changes made to the property of the baseline model 210 and the elements of the baseline model 210.

The processing unit 302 may determine the merge outcomes for the changes made in the modified versions (212, 214) of the model. The processing unit 302 may classify the changes as either auto-mergeable changes or conflicting changes based on the changes made to the baseline model 210.

Thus, the processing unit 302 automatically merges the changes made to the baseline model 210 by multiple users in an MBSE environment.

The input unit 312 and the output unit 314 may facilitate the receipt of input information by the various modules from one or more I/O devices as well as the output of information from the modules to the one or more I/O devices. The I/O devices may include any of a variety of components such as a display or a display screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 310 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus 316 may include at least one of a system bus, a memory bus, an address bus, or a message bus, and may permit the exchange of information (e.g., data (including computer-executable code), signaling, etc.) between various components of the data processing device 108. The bus may include, without limitation, a memory bus or a memory controller, a peripheral bus, an accelerated graphics port, and so forth.

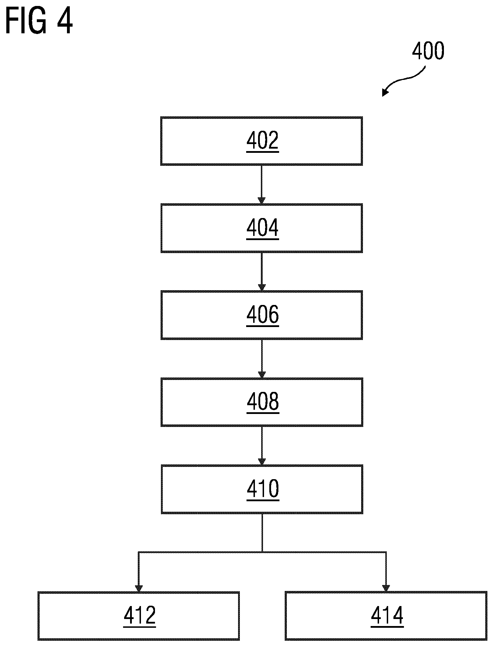

FIG. 4 is a flowchart 400 of a method of automatically merging changes in a model-based systems engineering (MBSE) ecosystem, in accordance with an embodiment of the present invention. At step 402, the processing unit 302 may receive the baseline model 210 in a structured data form such as JSON file. The baseline model 210 may be stored in the remote server 104 and the data processing device 108 may communicate with the remote server 104 via the communication network 106 to receive the baseline model 210.

At step 404, the processing unit 302 may receive the modified versions (212, 214) of the baseline model 210 in a structured data format such as JSON file. The baseline model 210 may be modified in the first user device 102a and the second user device 102b by the first user and the second user respectively. The baseline model 210 may be modified using the first application 202 and/or the second application 204 by the users. The data processing device 108 receives the JSON file of the first modified version 212 from the first user device 102a, and the JSON file of the second modified version 214 from the second user device 102b.

At step 406, the processing unit 302 identifies the changes made to the modified versions (212, 214) of the baseline model 210. The processing unit 302 may compare the first modified version 212 and the second modified version 214 against the baseline model 210 to determine the changes made to the first modified version 212 and the second modified version 214 respectively.

The processing unit 302 may identify the changes corresponding to the elements of the model and/or the properties of the elements.

In an embodiment, the property changes may be determined by changes to the key-value pairs associated with elements in the structured data format (JSON file).

In an embodiment, the element changes may be detecting based on additions, deletions, or modifications of nodes in the structured data format (JSON file).

The following table shows the modifications made to the model and the corresponding changes in the JSON file of the model.

**Table 1**

| Cases | Changes | |
|---|---|---|
| | Prop. Chg | Ele. Chg |
| Base Model & Add a block | TRUE | TRUE |
| Base Model & Add an attribute | TRUE | TRUE |
| Base Model & Add a port | TRUE | TRUE |
| Base Model & Delete a connection | TRUE | TRUE |
| Base Model & Move a block | TRUE | FALSE |
| Base Model & Relayout a connection | TRUE | FALSE |
| Base Model & Rename a blocktype | TRUE | FALSE |
| Base Model & Rename a component | TRUE | FALSE |
| Base Model & Rename a port | TRUE | FALSE |

As an example, if a new block is added to the baseline model 210, then the processing unit 302 determines that the modification results in property change, and element change in the structured data format (JSON file) of the baseline model 210. Thus, for all modifications made to the baseline model 210, the processing unit 302 determines the property change and/or element change in the structured data format (JSON file) of the model

At step 408, the processing unit 302 determines the merge outcomes for the identified changes in the first modified version 212 and the second modified version 214 of the models. The merge outcomes may be either auto-mergeable changes or conflicting changes.

At step 410, the processing unit 302 determines whether the identified changes are auto mergeable. The processing unit 302 applies predefined merge rules to determine whether the change is auto mergeable or conflicting.

If the identified change is auto mergeable, then at step 412, the processing unit 302 automatically merges the changes in the first modified version 212 and the second modified version 214 of the model, and outputs a merge result in the form of a single final version of the model.

If the identified change is a conflicting change, then at step 414, the processing unit 302 flags the change for user intervention. The user may further determine whether to merge the changes, ignore the changes made in modified versions (212, 214), or prioritize either the first modified version 212 or the second modified version 214.

In an embodiment, the method comprises the step of generating a merge result. The merge result comprises a representation of the merged model incorporating auto-mergeable changes. Further, the merge result comprises a list of conflicting changes requiring user intervention.

Further, the method comprises providing the merge result via an application programming interface (API) for integration with one or more MBSE tools. The API enables downstream tools to display merge outcomes and facilitate conflict resolution.

The final version of the model is generated upon merging the changes in the modified versions of the baseline model. Further, this final version of the model is used by an MBSE tool to enable design, analysis, verification, validation, and optimization of an engineering project. The engineering project may refer to a process automation project, a manufacturing execution system, a manufacturing process, smart grid implementation, so on and so forth.

In one embodiment, the predefined merge rules comprise a first rule wherein property changes are flagged as a conflict if the same key is impacted in the modified versions (212, 214) of the model, unless the changes to the property values are identical, in which case the conflict is resolved automatically.

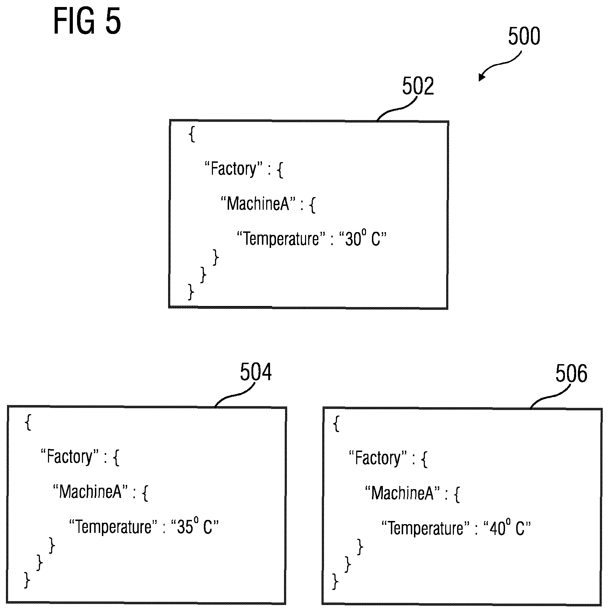

FIG. 5 illustrates a modification scenario 500 in accordance with a first rule of the predefined merge rules of the present invention. The figure illustrates a structured data format (JSON file) of the baseline model 502, the first modified version 504, and the second modified version 506.

In this scenario, the first user 206 modifies the "Temperature" property of "MachineA" to set its value to "35°C" in the first modified version 504. Concurrently, the second user 208 modifies the same "Temperature" property, but sets its value to "40°C" in the second modified version 506. When these changes are processed, the system 200 flags the "Temperature" key as a conflict because the modifications impact the same key and result in differing property values. As per the described method, such conflicts would require resolution due to the non-identical changes. In contrast, if both the users had modified the "Temperature" property to the same value, such as "35°C," the method would recognize the identical modifications and automatically resolve the conflict by merging the changes without requiring further user intervention.

In an embodiment, the processing unit 302 implements an optimization technique to automatically merge identical changes to property values without requiring user intervention.

The property changes are resolved through value comparison of key-value pairs of the modified versions against the baseline model. The method resolves conflicts by comparing the values of the key-value pairs across the modified versions of the data against the baseline model. Two versions of the model (modified by different users) are checked for differences in property values compared to the baseline model. If there is a conflict (e.g., both versions modify the property, but to different values), the system flags it for resolution. Collaborators can then decide which value to keep or reconcile the changes.

In an embodiment, the predefined merge rules comprise a second rule wherein new key additions at different hierarchical levels in the structured data format are classified as auto-mergeable changes.

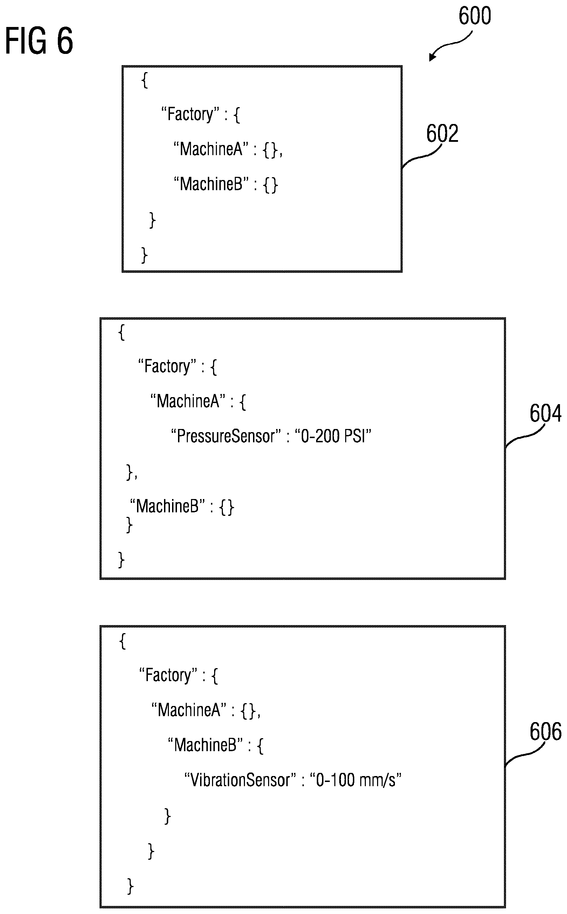

FIG. 6 illustrates a modification scenario 600 in accordance with a second rule of the predefined merge rules of the present invention. The figure illustrates a structured data format (JSON file) of the baseline model 602, the first modified version 604, and the second modified version 606.

In this scenario, the first user 206 adds a new key, "PressureSensor," to the "MachineA" hierarchical level in the first modified version 604. Simultaneously, the second user 208 adds a new key, "VibrationSensor," to the "MachineB" hierarchical level in the second modified version 606. Because the additions of "PressureSensor" and "VibrationSensor" occur at distinct hierarchical levels-specifically under "MachineA" and "MachineB," respectively-the method classifies these changes as non-conflicting. Consequently, the system automatically merges these modifications.

In an embodiment, the predefined merge rules comprise a third rule wherein new key additions at the same hierarchical level in the structured data format are classified as conflicting changes and flagged for user intervention.

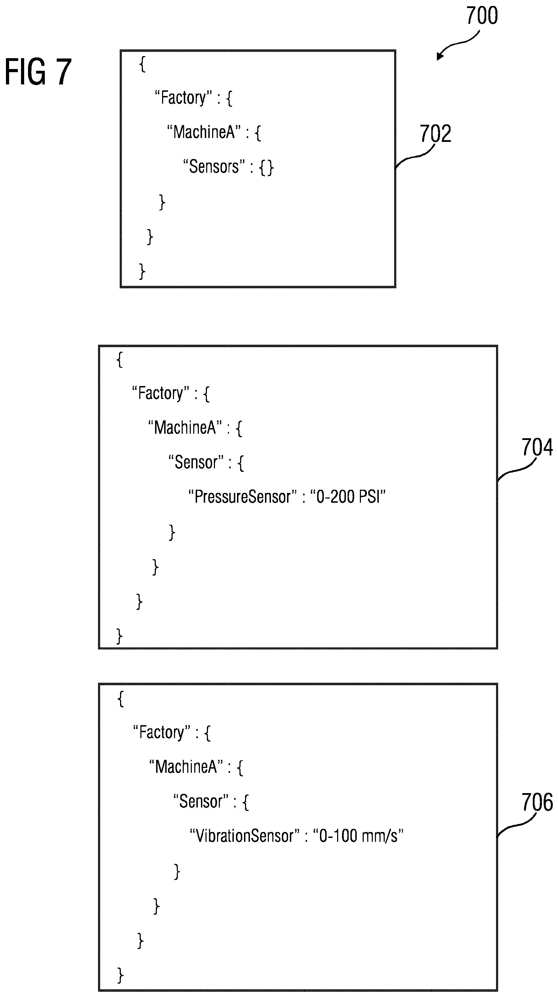

FIG. 7 illustrates a modification scenario 700 in accordance with a third rule of the predefined merge rules of the present invention. The figure illustrates a structured data format (JSON file) of the baseline model 702, the first modified version 704, and the second modified version 706.

In this scenario, the first user 206 adds a new key, "PressureSensor," to the "Sensors" object under "MachineA" in the first modified version 704. Simultaneously, the second user 208 adds a different key, "VibrationSensor," to the same "Sensors" object in the second modified version 706. Because both changes involve the addition of new keys ("PressureSensor" and "VibrationSensor") to the same hierarchical level ("Sensors"), the method flags these changes as conflicting to prevent ordering or structural ambiguity within the shared model. Resolution of this conflict requires user intervention to determine the appropriate arrangement or merging strategy.

In an embodiment, the predefined merge rules comprise a fourth rule wherein deletions of elements at different hierarchical levels in the structured data format are classified as auto-mergeable changes.

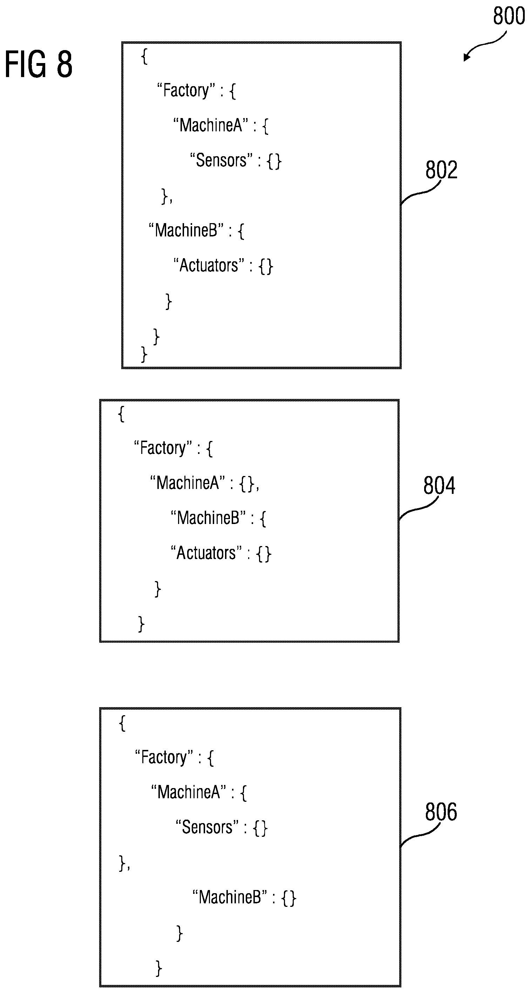

FIG. 8 illustrates a modification scenario 800 in accordance with a fourth rule of the predefined merge rules of the present invention. The figure illustrates a structured data format (JSON file) of the baseline model 802, the first modified version 804, and the second modified version 806.

In this scenario, the first user 206 deletes the "Sensors" object from "MachineA" in the first modified version 804. Simultaneously, the second user 208 deletes the "Actuators" object from "MachineB" in the second modified version 806. Because these deletions occur at distinct hierarchical levels-specifically under "MachineA" and "MachineB"-the method classifies these changes as auto-mergeable changes. As a result, the deletions are automatically merged without requiring user intervention.

In an embodiment, the predefined merge rules comprise a fifth rule wherein deletions of elements at same hierarchical levels in the structured data format are classified as auto-mergeable changes.

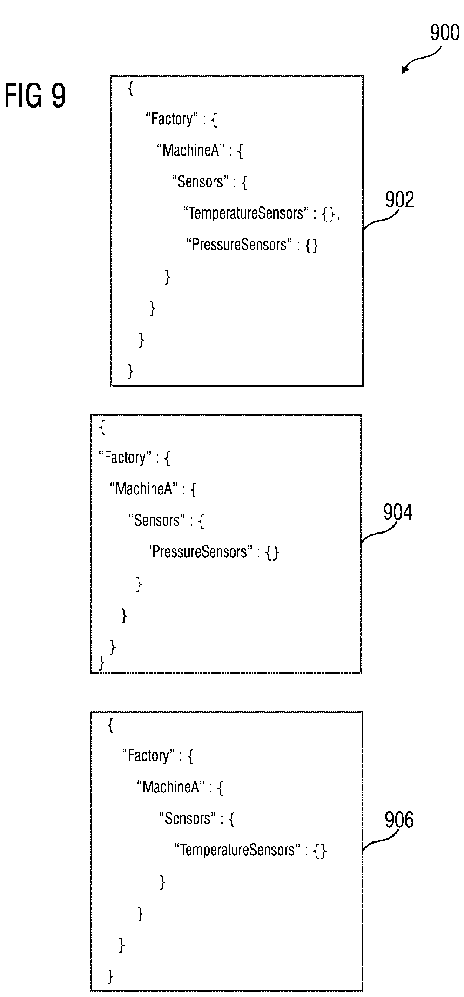

FIG. 9 illustrates a modification scenario 900 in accordance with a fifth rule of the predefined merge rules of the present invention. The figure illustrates a structured data format (JSON file) of the baseline model 902, the first modified version 904, and the second modified version 906.

In this scenario, the first user 206 deletes the "TemperatureSensor" key from the "Sensors" object under "MachineA" in the first modified version 904. Concurrently, the second user 208 deletes the "PressureSensor" key from the "Sensors" object under "MachineA" in the second modified version 906. Although both modifications affect elements under the same hierarchical level ("MachineA"), they target different keys. As such, the system classifies these changes as non-conflicting and automatically merges them.

In an embodiment, the predefined merge rules comprise a sixth rule wherein deletions of a parent element in one modified version of the model combined with additions of a child element in another modified version of the model are classified as conflicting changes and flagged for user intervention.

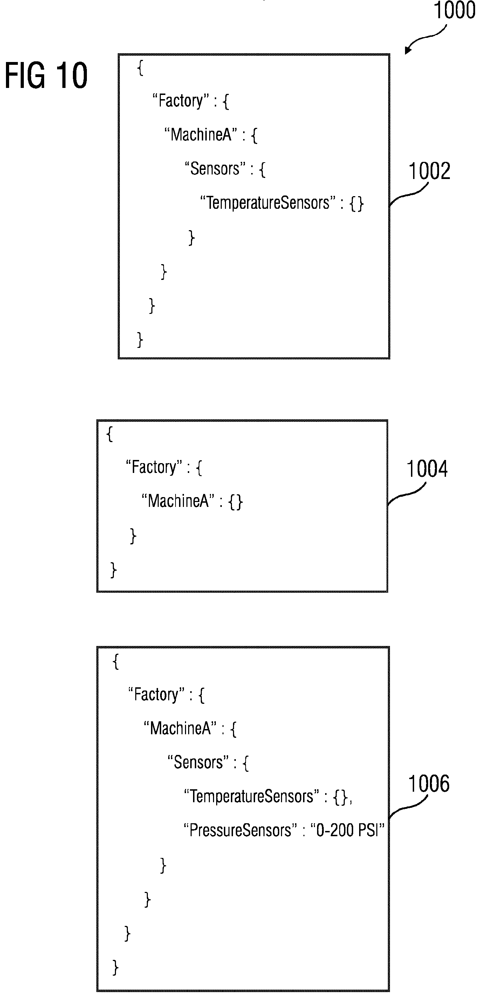

FIG. 10 illustrates a modification scenario 1000 in accordance with a sixth rule of the predefined merge rules of the present invention. The figure illustrates a structured data format (JSON file) of the baseline model 1002, the first modified version 1004, and the second modified version 1006.

In this scenario, the first user 206 deletes the entire "Sensors" object under "MachineA" in the first modified version 1002. The second user 208, meanwhile, adds a new key, "PressureSensor," to the "Sensors" object under "MachineA" in the second modified version 1006. The methods described detect this combination of changes (deletion of the parent "Sensors" element by the first user 206 and addition of a new child element "PressureSensor" under "Sensors" by the second user) as conflicting. This is because the addition of the child element assumes the continued existence of its parent, which has been removed in another version. To prevent ambiguities and data inconsistencies, the changes are flagged for user intervention to determine the appropriate resolution (e.g., retaining the parent "Sensors" element with all changes applied or deleting it completely along with associated child elements).

In an embodiment, the predefined merge rules comprise a seventh rule wherein deletions of a parent element in one modified version of the model combined with modifications of a child element in another modified version of the model are classified as conflicting changes and flagged for user intervention.

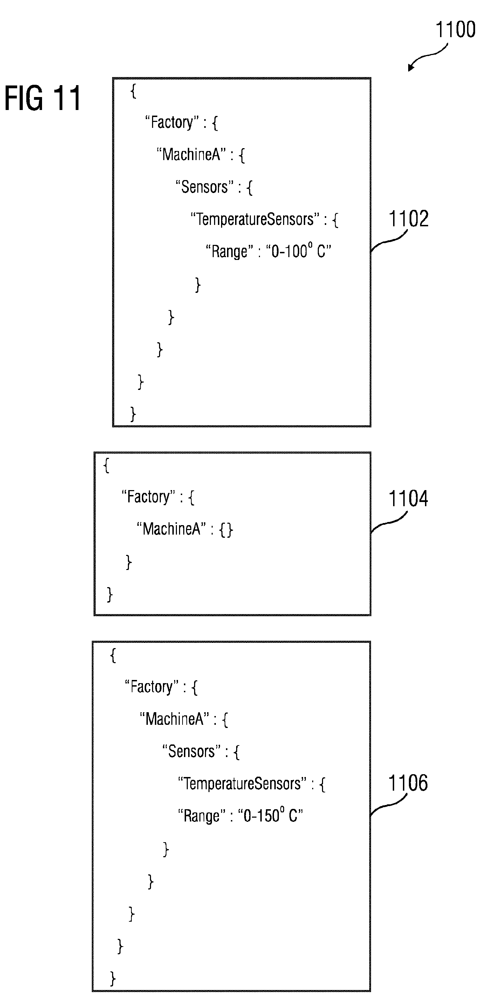

FIG. 11 illustrates a modification scenario 1100 in accordance with a seventh rule of the predefined merge rules of the present invention. The figure illustrates a structured data format (JSON file) of the baseline model 1102, the first modified version 1104, and the second modified version 1106.

In this scenario, the first user 206 deletes the entire "Sensors" object under "MachineA" in the first modified version 1102. The second user 208, on the other hand, modifies the "Range" property of the "TemperatureSensor" object within the "Sensors" hierarchy, changing its value from "0-100°C" to "0-150°C" in the second modified version 1106. The method detects this combination of changes-the first user 206 deleting the parent "Sensors" element and second user 208 modifying the "Range" property of the child "TemperatureSensor"-as a conflict. This is because the deletion of the parent element by first user 206 directly removes the hierarchy where the child modification by second user is applied. To avoid data loss and structural inconsistencies, the conflicting changes are flagged for user intervention, allowing collaborators to decide on the resolution (e.g., whether to preserve the parent and apply the modification or proceed with the deletion as intended).

In an embodiment, conflicts related to the ordering of elements, such as Left-Right or Right-Left precedence, are flagged for user intervention. When different versions of the model make conflicting changes to the order of these elements-such as moving an element to the beginning in one version (Left-Right precedence) and to the end in another version (Right-Left precedence)-the system identifies these ordering conflicts and flags them for user intervention.

In an embodiment, the predefined merge rules used to determine merge outcomes are model-agnostic and applicable across different structured data formats representing the models. Specifically, these rules are model-agnostic, meaning they are not tailored to the specific structure, hierarchy, or semantics of any particular data model. Instead, they are designed to work seamlessly across different structured data formats, such as JSON, XML, YAML, or other formats used to represent models. The rules focus on universal aspects of structured data, such as key-value pairs, hierarchical relationships, and the nature of changes (additions, deletions, or modifications), enabling a consistent approach to resolving changes regardless of the underlying data format.

In an embodiment, the specific merge rule that determined the conflicting changes or auto-mergeable changes is indicated against the change. Thus, whenever a change is classified as conflicting (requiring user intervention) or auto-mergeable (automatically resolved by the system), the specific merge rule that led to this classification is clearly identified and associated with the change itself.

By indicating the merge rule, the system provides a clear rationale for why a change was handled in a certain way. For example, if two users independently modified the same property in a model (e.g., both edited the "Range" of a "TemperatureSensor"), the method might categorize this as a conflict based on a "property change conflict" rule. This feature adds a level of accountability and clarity to the merge process by documenting the decision-making logic.

The proposed method introduces a graph-based merging algorithm for models within the context of Model-Based Systems Engineering (MBSE), offering several distinct advantages over existing text-based and domain-specific merging approaches. Unlike traditional text-based merging algorithms, which rely on string matching and lack contextual insight, this method provides enhanced context-based merging, allowing users to understand the logical hierarchy of changes within the model, simplifying traceability and visualization. Additionally, the proposed method features classification of merge changes, enabling differentiation between property and element modifications, facilitating clear communication of changes to users and tools.

A significant advantage is the improved conflict detection and resolution, offering auto-merging for non-conflicting changes using predefined rules-impossible in text-based approaches. Compared to other graph-based methods, the proposed method leverages Formal Concept Analysis (FCA) for faster and efficient merging, extended to accommodate hierarchical and structural contexts not defined by standard models like UML or EMF.

The proposed method is not only domain-agnostic, enabling applicability across various models, but also incorporates explainability, as merging rules provide traceable reasoning behind decisions. Additional optimizations support level-based merging, accommodating hierarchical relationships across different abstraction levels. With built-in classification of changes and model-agnostic features, the invention establishes itself as a robust and versatile merging solution tailored to MBSE scenarios, enhancing user experience, collaboration, and tool interoperability.

While the invention has been illustrated and described in detail with the help of a preferred embodiment, the invention is not limited to the disclosed examples. Other variations can be deducted by those skilled in the art without leaving the scope of protection of the claimed invention.

### List of references

100 - system for merging changes in a model-based systems engineering (MBSE) ecosystem
102a,102b - User device
104 - Remote server
106 - Communication network
108 - Data processing device
202 - First application
204 - Second application
206 - First user
208 - Second user
210 - Baseline model
212 - First modified version
214 - Second modified version
302 - Processing unit
304 - Memory
306 - Database
308 - Modules
310 - Network interface
312 - Input unit
314 - Output unit
400 - computer-implemented method for merging changes in a model-based systems engineering (MBSE) ecosystem
500 - modification scenario in accordance with a first rule of the predefined merge rules
600 - modification scenario in accordance with a second rule of the predefined merge rules
700 - modification scenario in accordance with a third rule of the predefined merge rules
800 - modification scenario in accordance with a fourth rule of the predefined merge rules
900 - modification scenario in accordance with a fifth rule of the predefined merge rules
1000 - modification scenario in accordance with a sixth rule of the predefined merge rules
1100 - modification scenario in accordance with a seventh rule of the predefined merge rules

## Claims

1. A computer-implemented method for merging changes in a model-based systems engineering (MBSE) ecosystem, the method comprising:
receiving as input, by a processing unit, a baseline model represented in a structured data format from a remote server, and two or more modified versions of the baseline model, wherein:
the baseline model comprises a plurality of elements and associated properties; and
each modified version comprises changes to at least one of the elements and associated properties of the baseline model;
detecting, by the processing unit, one or more of element changes and property changes between the baseline model and each modified version, wherein each property change is detected based on modifications to key-value pairs associated with the elements in the structured data format, and wherein each element change is detected based on additions, deletions, or modifications of nodes in the structured data format; and
determining, by the processing unit, one merge outcomes for the identified changes by applying predefined merge rules on the modified versions of the baseline model,
wherein the merge rules classify each of the changes as one of an auto-mergeable change and a conflicting change, wherein the auto-mergeable change is indicative of a change that is automatically mergeable without user intervention.

2. The method according to claim 1, wherein the method comprises:
merging, by the processing unit, the auto-mergeable changes in the modified versions of the baseline model to generate a merge result;
providing, by the processing unit, a list of conflicting changes in a user interface; and
providing the merge result to one or more MBSE tools via an application programming interface (API), to enable the one or more MBSE tools to display the merge outcomes for facilitating conflict resolution.

3. The method according to any of the preceding claims, wherein a change in property is classified as a conflicting change if the same key is impacted in the modified versions of the model, unless the changes to the property values in the modified versions are identical, in which case the change is classified as auto-mergeable change.

4. The method according to any of the preceding claims, wherein a new key addition at different hierarchical levels in the structured data format is classified as an auto-mergeable change.

5. The method according to any of the preceding claims, wherein a new key addition at the same hierarchical level in the structured data format is classified as a conflicting change.

6. The method according to any of the preceding claims, wherein deletion of elements at different hierarchical levels in the structured data format is classified as an auto-mergeable change.

7. The method according to any of the preceding claims, wherein deletion of a parent element in one modified version of the model combined with addition or modification of a child element in another modified version of the model is classified as conflicting change.

8. The method according to any of the preceding claims, wherein the auto-mergeable property changes are resolved through value comparison of key-value pairs of the modified versions against the baseline model.

9. The method according to any of the preceding claims, wherein the method comprises:
generating, by the processing unit, a final version of the model upon merging the changes in the modified versions of the baseline model; and
providing, by the processing unit, the final version of the model to an MBSE tool to enable design, analysis, verification, validation, and optimization of an engineering project.

10. The method according to any of the preceding claims, wherein the method optimizes auto-merging by merging identical changes to property values without requiring user intervention.

11. The method according to any of the preceding claims, changes in the modified version relating to ordering of elements including Left-Right and Right-Left precedence is classified as conflicting change.

12. The method according to any of the preceding claims, wherein the types of changes made to the baseline model are categorized and presented to the user as one of a property change and an element change.

13. The method according to any of the preceding claims, wherein the specific merge rule that determined the conflicting change or auto-mergeable changes is indicated against the change in the merge result.

14. A data processing device for merging changes in a model-based systems engineering (MBSE) ecosystem, wherein the data processing device comprises:
one or more processing units; and
a memory communicatively coupled to the one or more processing units, the memory comprising a module stored in the form of machine-readable instructions executable by the one or more processing units, wherein the module is configured to perform the method steps according to claims 1 to 13.

15. A system for merging changes in a model-based systems engineering (MBSE) ecosystem, wherein the system comprises:
a first application, wherein a baseline model is modified in the first application by a first user to create a first modified version of the model;
a second application, wherein the baseline model is modified in the second application by a second user to create a second modified version of the model; and
the data processing device for merging changes in a model-based systems engineering (MBSE) ecosystem according claim 14.
